# EUROPÄISCHE PATENTSCHRIFT

(11) **EP 1 254 495 B1**
(45) Veröffentlichungstag und Bekanntmachung des Hinweises auf die Patenterteilung: **21.09.2005**
(21) Anmeldenummer: 00993828.3
(22) Anmeldetag: 06.12.2000
(51) Int. Cl.: H02B 1/056

(54) **VORRICHTUNG ZUR BEFESTIGUNG VON SCHALTGERÄTEN AUF TRAGSCHIENEN**
APPARATUS FOR FIXING SWITCHING DEVICES ON MOUNTING RAILS
DISPOSITION DE FIXATION D'APPAREILLAGES DE COMMUTATION SUR DES PROFILS SUPPORTS

(30) Priorität: 10.02.2000 DE 10005818
(43) Veröffentlichungstag der Anmeldung: 06.11.2002
(73) Patentinhaber: Moeller GmbH, 53115 Bonn (DE)
(72) Erfinder: SCHLIEBER, Simone, 53111 Bonn (DE)
(86) Internationale Anmeldenummer: PCT/EP2000/012270
(87) Internationale Veröffentlichungsnummer: WO 2001/059898

(56) Entgegenhaltungen:
- DE-A- 19 515 923
- DE-U- 7 318 411

## Beschreibung

Die Erfindung betrifft eine Vorrichtung gemäß dem Oberbegriff des Anspruchs 1. (Siehe DE-A1-195 15 923).

Aus der Druckschrift DE 296 17 112 U1 ist bereits eine Tragplatte zur Befestigung einer Schaltgerätekombination bestehend aus einem Schütz und einem Leistungsschalter bekannt. Diese Tragplatte weist auf ihrer Rückseite eine Hutschienenbefestigungsvorrichtung zur Befestigung der Tragplatte auf der Hutschiene und auf ihrer Vorderseite eine Hutschiene zur Befestigung eines Schaltgerätes auf der Tragplatte auf. Ferner weist die Tragplatte zwei parallel verlaufende Lochreihen auf, um gegebenenfalls eine weitere Hutschiene auf der Tragplatte anzubringen.

Der Erfindung liegt die Aufgabe zugrunde, eine gattungsgemäße Vorrichtung zu schaffen, die bei hoher Befestigungssicherheit einer Gerätekombination auf einer Tragschiene die Montage der Gerätekombination auf der Tragschiene erleichert.

Ausgehend von einer Vorrichtung der eingangs genannten Art wird die Aufgabe erfindungsgemäß durch die kennzeichnenden Merkmale des unabhängigen Anspruchs gelöst, während den abhängigen Ansprüchen vorteilhafte Weiterbildungen der Erfindung zu entnehmen sind. Die Vorrichtung ist vorzugsweise als Adapter für Hutschienenprofile ausgebildet und weist auf ihrer Rückseite erste Mittel zur Befestigung auf einer Tragschiene und auf ihrer Vorderseite zweite Mittel zur Bestigung eines Schaltgerätes beziehungsweise einer Schaltgerätekombination auf. Die Mittel zur Befestigung eines Schaltgerätes beziehungsweise einer Schaltgerätekombination sind vorzugsweise als L-förmige Profilfortsätze ausgebildet, wie sie als einseitiger Hintergriff eines Hutschienenprofils bekannt sind. Der Adapter besteht im wesentlichen aus einem länglichen quaderförmigen Grundkörper der an seinem einen Ende, auf der Vorderseite, ein fest angeordnetes erstes Wirkelement für den Eingriff in eine Befestigungsausnehmung eines ersten Schaltgerätes der Schaltgerätekombination aufweist und der, von diesem ersten Wirkelement beabstandet, vorzugsweise an seinem anderen Ende, ein zweites Wirkelement aufweist, welches in der Befestigungsachse X linearbeweglich am Grundkörper gelagert ist. Dabei ist das erste Wirkelement vorzugsweise einteilig mit dem aus Isoliermaterial bestehenden Grundkörper ausgebildet, während das zweite Wirkelement vorzugsweise einteilig mit einem aus Isoliermaterial bestehenden Halterungselement ausgebildet ist, welches linearbeweglich an dem Grundkörper angeordnet ist. In einer Ausführungsform ist das oberseitig angeordnete linearbewegliche Wirkelement als auf dem Grundkörper verschiebbares, den Grundkörper bereichsweise umgreifendes kappenartiges oder als blockartiges Teil des Grundkörpers ausgebildet und über Federmittel nach aussen, in Richtung vom fixierten Wirkelement weg, vorspannt.
Dabei weist das Halterungselement auf seiner Oberseite ein L-förmiges Befestigungsprofil zum Eingriff in die Ausnehmung einer Befestigungsausnehmung eines Schaltgerätes auf.

Weitere Einzelheiten und Vorteile der Erfindung ergeben sich aus dem folgenden, anhand von Figuren erläuterten Ausführungsbeispiel. Es zeigen
- Figur 1:: eine Schaltgerätekombination (z.B. Motorstarterkombination);
- Figur 2:: die erfindungsgemäße Vorrichtung zur Befestigung einer Schaltgerätekombination in einer möglichen Ausführung; und
- Figur 3:: die erfindungsgemäße Vorrichtung zur Befestigung einer Schaltgerätekombination in einer weiteren möglichen Ausführung.

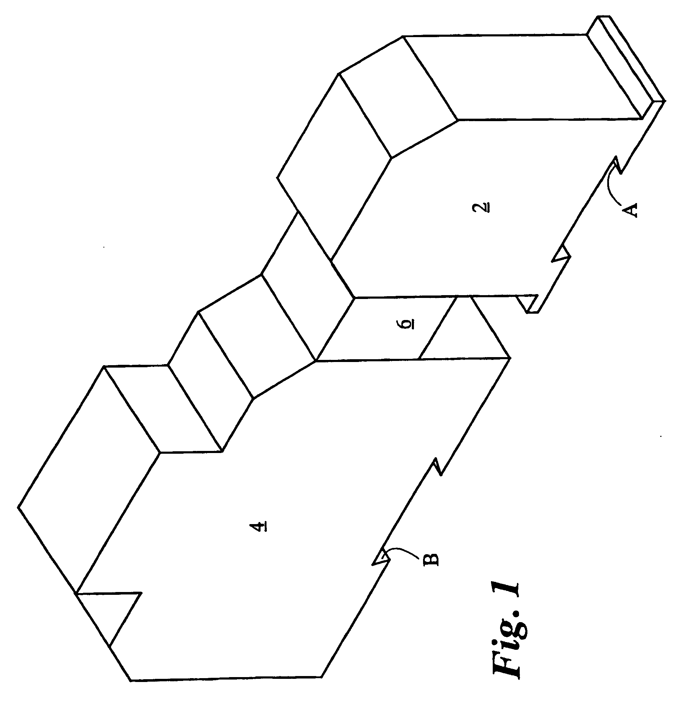

Nach Fig. 1 besteht eine mögliche, auf einer Tragschiene mit Hutschienenprofil oder dergleichen zu befestigende Schaltgerätekombination aus einem Schütz 2 und einem Motorschutzschalter 4. Die beiden Einzelgeräte sind in der dargestellten Ausführungsform durch ein vorzugsweise starres Verbindungsstück 6 (Verdrahtungsadapter) miteinander verbunden und verschaltet. Ist die Schaltgerätekombination auf der Vorrichtung erst montiert, wird der Verbindungsbereich der beiden Schaltgeräte durch die Oberseite der Vorrichtung stabilisierend gestützt. Hierdurch wird das Verbindungsstück 6 von mechanischen Belastungen befreit.

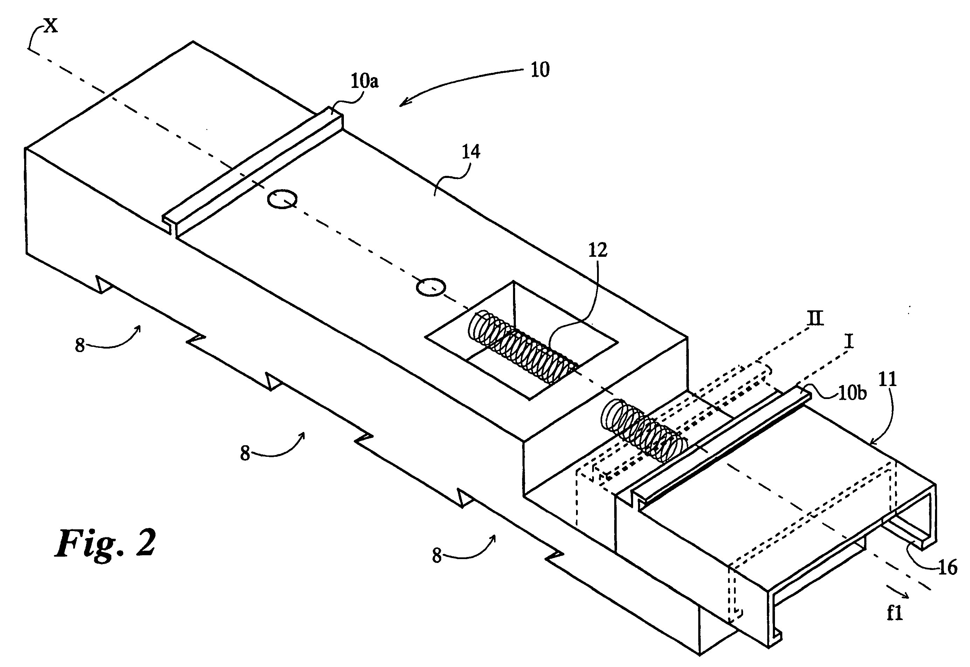

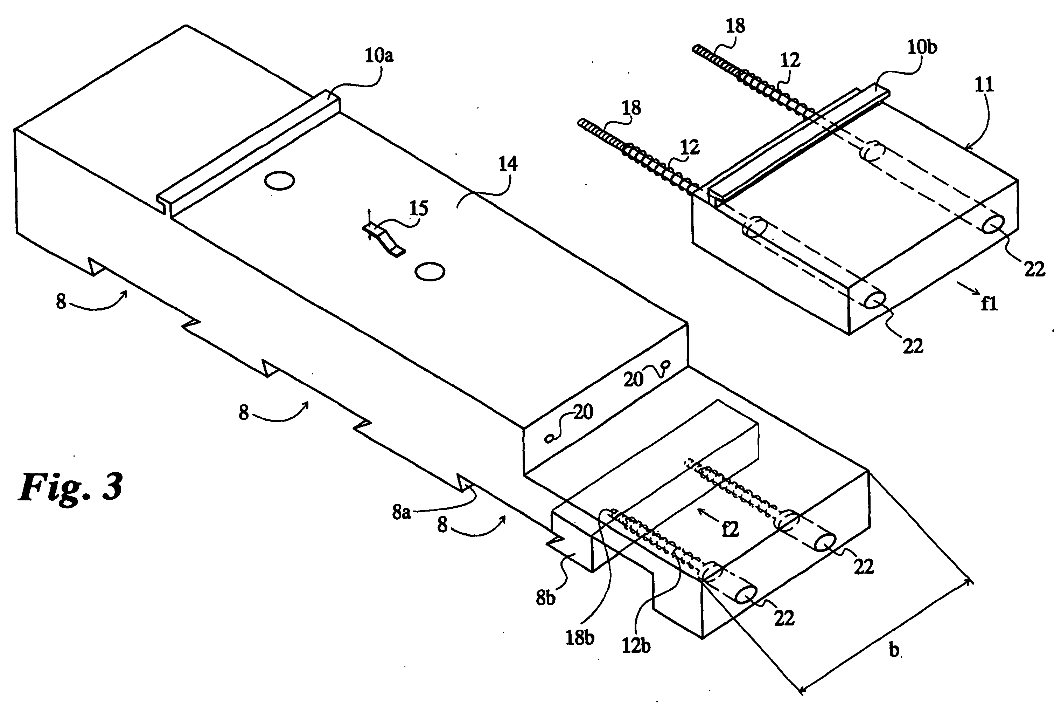

Fig. 2 und 3 zeigen jeweils eine mögliche Ausführungsform der erfindungsgemäßen Vorrichtung. Diese ist vorzugsweise als Hutschienenadapter ausgebildet und weist auf ihrer der Tragschiene zugekehrten Seite (Unterseite) erste Befestigungsmittel 8 zur Befestigung der Vorrichtung auf einer Tragschiene auf. Auf ihrer, der Tragschiene abgekehrten Seite (Oberseite) weist die Vorrichtung zweite Befestigungsmittel 10 zur Befestigung eines Schaltgerätes insbesondere einer Schaltgerätekombination 2, 4, 6 gemäß Fig. 1 auf. Jedes der Befestigungsmittel 8; 10 umfasst paarweise gegenüberliegende Wirkelemente 8a, 8b; 10a, 10b.

Erfindungsgemäß ist mindestens eines der Wirkelemente 8b; 10b linearbeweglich entlang der Befestigungsachse X gelagert. Dabei ist das jeweilige Wirkelement 8b; 10b derart ausgebildet und am Grundkörper 14 der Vorrichtung gelagert, dass es von einer ersten Befestigungsposition I in eine zweite von der ersten Befestigungsposition I axial beabstandeten Befestigungsposition II überführbar ist. Vorzugsweise erstreckt sich das Wirkelement 8b; 10b wie in Fig. 2 und 3 dargestellt über die gesamte Breite b des Grundkörpers 14.

Eine derartige Lagerung der oberseitigen Wirkelemente 10a, 10b wird vorzugsweise realisiert, indem das bewegliche Wirkelement 10b über ein Federmittel 12 nach aussen entgegen seiner Bewegungsachse vom Vorrichtungsmittelpunkt weggerichtet, vorgespannt ist. Hierdurch wird zum einen die Montage von Schaltgerätekombinationen gemäß Fig. 1 erleichtert und erst die Montage vormontierter Schaltgerätekombinationen ermöglicht. Zum anderen werden Baumaßtoleranzen der Befestigungsmittel von der Befestigungsvorrichtung und Baumaßtoleranzen von den Schaltgeräten ausgeglichen. Ein weiterer Vorteil wird erzielt, wenn das verschiebbare Wirkelement 10b derart weit am Ende des Grundkörpers 14 der Vorrichtung angeordnet ist, dass es in der Richtung der Befestigungsachse X über den Grundkörper 14 der Vorrichtung hervorsteht, so dass die Vorrichtung bei montierter Gerätekombination auch immer nur so lang ist, wie dies auch tatsächlich erforderlich ist (Adapter wird zusammengeschoben). Hierdurch wird wertvoller Platz im Anbauraum (z.B. Schaltschrank) eingespart. Weiterhin wird durch den erzielten Toleranzausgleich die durch die Schaltvorgänge erzeugte Geräuschentwicklung der montierten Schaltgerätekombination reduziert, indem ein seitliches Verrutschen der Kombination auf der Hutschiene bzw. auf der Vorrichtung durch die mit einer Federkraft beaufschlagten Befestigungsmittel minimiert wird. Die Fixierung der Schaltgeräte 2, 4 wird mit Vorteil noch unterstützt, dadurch dass die Vorrichtung oberseitig Federmittel 15 aufweist, welche bei montierter Schaltgerätekombination gegen zumindest eines der Schaltgeräte eine Federkraft ausüben. Ein derartiges Federmittel 15 kann zum Beispiel in Form eines an den Grundkörper 14 angespritzten federnden Schenkels, der von unten gegen eines oder jedes Schaltgerät 2, 4 drückt, ausgeführt sein. In einer anderen Ausführung kann ein elastisches Federelement in Form einer Spiralfeder oder eines elastischen Schaumstoffteils oder dergleichen gebildet sein.

Die Montage einer vormontierten Gerätekombination auf den erfindungsgemäßen Adapter geschieht wie folgt:
Ausgehend von einer erfindungsgemäßen Befestigungsvorrichtung die auf waagerecht verlaufenden Tragschienen angeordnet ist, ist eine Schaltgerätekombination auf der Befestigungsvorrichtung zu montieren, indem diese mit der unteren Ausnehmung A des ersten Schaltgerätes 2 das linearbewegliche Wirkelement 10b hintergreift, das Wirkelement 10b entgegen der Federkraft f1 bewegt und das zweite Schaltgerät 4 mit dessen oberer Ausnehmung B in in das feststehende Wirkelement 10a eingehängt wird.

Gemäß Fig. 2 und 3 sind die oberseitigen Wirkelemente 10a, 10b vorzugsweise als L-förmige Profilfortsätze ausgebildet, wie sie als einseitiger Hintergriff eines Hutschienenprofils bekannt sind. Die Vorrichtung besteht im wesentlichen aus einem länglichen quaderförmigen Grundkörper 14 der an seinem einen Ende, auf der Vorderseite, mindestens einen fest angeordneten ersten Befestigungsfortsatz (Wirkelement 10a) für den Eingriff in eine Befestigungsausnehmung eines Schaltgerätes aufweist und der, von diesem ersten Fortsatz beabstandet, vorzugsweise an seinem anderen Ende, einen zweiten Befestigungsfortsatz (Wirkelement 10b) aufweist, der in der Befestigungsachse X linearbeweglich am Grundkörper 14 gelagert ist. Dabei ist das erste Wirkelement 10a vorzugsweise einteilig mit dem aus Isoliermaterial bestehenden Grundkörper 14 ausgebildet, während das zweite Wirkelement 10b vorzugsweise einteilig mit einem aus Isoliermaterial bestehenden Halterungselement 11 ausgebildet ist, welches linearbeweglich an dem Grundkörper 14 angeordnet ist. Um verschiedene Schaltgerätekombinationen deutlich unterschiedlicher Baugröße und damit auch deutlich unterschiedlicher Länge montieren zu können, können mehrere Wirkelemente 10a vorhanden sein, so dass größere Abstände der Befestigungsausnehmungen A, B der Schaltgeräte einer Kombination einstellbar sind. Alternativ hierzu kann aber auch ein einziges Wirkelement 10a vorhanden sein, welches in unterschiedlichen Positionen am Grundkörper 14, zum Beispiel durch beabstandete Raststellungen, arretierbar ist.

In einer bevorzugten Ausführungsform ist das linaerbewegliche Halterungselement 11 als auf dem Grundkörper 14 verschiebbares, den Grundkörper 14 bereichsweise umgreifendes kappenartiges oder als blockartiges Teil des Grundkörpers 14 ausgebildet und über Federmittel 12 nach aussen, in Richtung vom fixierten Wirkelement 10a weg, vorspannt.

Gemäß Fig. 2 ist das Halterungselement 11 als kappenartiges Element ausgebildet. Im Querschnitt gesehen ist das Halterungselement 11 hierbei im wesentlichen U-förmig ausgebildet, wobei es an seiner seinen seitlichen, den Grundkörper 14 umgreifenden Schenkelteilen nach innen gerichtete Fortsätze 16 aufweist. Diese Fortsätze 16 greifen in korrespondierende Führungsnuten des Grundkörpers 14 ein. Das Federelement 12 ist beispielsweise als Spiralfeder ausgebildet und im dargestellten Ausführungsbeispiel im wesentlichen mittig zwischen Grundkörper 14 und Halterungselement 11 angeordnet.

In einer anderen Ausführungsform des Halterungselements 11, gemäß Fig. 3, ist dieses als blockartiges Element ausgebildet. Dabei kann das Halterungselement 11 anstelle einer Führung über Führungsnuten gemäß Fig. 2 zum Beispiel über Schrauben 18 mit dem Grundkörper 14 verbunden sein. Hierfür weist der Grundkörper 14 Gewindebohrungen 20 zur Aufnahme der Schrauben 18 auf. Die Schrauben sind in Sacklochbohrungen 22 des Halterungselements 11 geführt und über Federelemente 12 gegen den Grundkörper 14 nach aussen mit einer Federkraft f1 beaufschlagt.

Die vorliegende Erfindung ist nicht auf die vorstehend beschriebenen Ausführungsformen beschränkt, sondern umfaßt auch alle im Sinne der Erfindung gleichwirkenden Ausführungsformen. In der Erfindung ist analog zu dem linearbeweglich gelagerten Halterungselement 11 zur oberseitigen Befestigung einer Schaltgerätekombination 2, 4, 6 auf der erfindungsgemäßen Vorrichtung das, beziehungsweise mindestens eines der unterseitige(n) Wirkelemente 8a, 8b ebenfalls linearbeweglich ausgebildet. Hierfür ist das Wirkelement 8b der schwalbenschwanzförmigen Ausnehmung (unterseitiges Befestigungsmittel 8) zur Aufnahme einer Hutschiene linearbeweglich in Befestigungsrichtung X gelagert. Dabei ist das Wirkelement 8b vorzugsweise ebenfalls über zwei Schrauben 18b mit dem Grundkörper 14 verbunden und über auf den Schrauben 18b befindliche Spiralfedern 12b mit einer ins Innere der Befestigungsaufnahme gerichteten Federkraft f2 beaufschlagt. Ferner gehören auch alle in der Zeichnung gezeigten Merkmale zur Erfindung. Insbesondere Geometrie, wie dargestellt. Weiterhin können auch Fixierungsmittel vorgesehen werden, die der Feststellung der linarbeweglichen Wirkelement (8b; 10b) dienen. Diese sind insbesondere als Feststellschraube ausführbar um das entsprechende bewegliche Mittel in einer montierten Position gegen den Grundkörper 14 zu fixieren.

## Patentansprüche

1. Vorrichtung zur Befestigung von Schaltgeräten (2, 4) auf Tragschienen, insbesondere Hutschienenadapter, umfassend
- unterseitige Befestigungsmittel (8) zur Befestigung der Vorrichtung auf der Tragschiene und
- oberseitige Befestigungsmittel (10) zur Befestigung mindestens eines Schaltgerätes (2, 4) auf der Vorrichtung,
- wobei jedes Befestigungsmittel (8; 10) paarweise sich gegenüberstehende Wirkelemente (8a, 8b; 10a, 10b) aufweist,
**dadurch gekennzeichnet, dass** mindestens ein oberseitig angeordnetes (10b) und mindestens ein unterseitig angeordnetes Wirkelement (8b) linearbeweglich gelagert ist derart, dass der Abstand der gegenüberstehenden Wirkelemente (8a, 8b; 10a, 10b) für unterschiedliche Befestigungspositionen (I, II) variierbar ist.

2. Vorrichtung nach Anspruch 1, **dadurch gekennzeichnet, dass** die paarweise gegenüberstehenden Wirkelemente (8a, 8b; 10a, 10b) in einer Ebene angeordnet sind, die sich parallel zur Oberflächenebene des Grundkörpers (14) der Vorrichtung erstreckt.

3. Vorrichtung nach Anspruch 1 oder 2, **dadurch gekennzeichnet, dass** die Wirkelemente (10a, 10b) der oberseitigen Befestigungsmittel (10) zur Befestigung von Schaltgeräten (2, 4) mit Hutschienenaufnahmen ausgebildet sind.

4. Vorrichtung nach einem der vorherigen Ansprüche, **dadurch gekennzeichnet, dass** das linearbewegliche Wirkelement (8b; 10b) sich über die gesamte Breite (b) des Grundkörpers (14) der Vorrichtung erstreckt.

5. Vorrichtung nach einem der vorherigen Ansprüche, **dadurch gekennzeichnet, dass** das linearbeweglich gelagerte Wirkelement (10b) des oberseitigen Befestigungsmittels (10) über ein Federmittel (12) nach aussen, in seiner Bewegungsachse vom Vorrichtungsmittelpunkt weg gerichtet, vorgespannt ist.

6. Vorrichtung nach einem der vorherigen Ansprüche, **dadurch gekennzeichnet, dass** das oberseitig angeordnete linearbewegliche Wirkelement (10b) als Halterungskappe mit U-förmigem Querschnitt ausgebildet ist.

7. Vonichtung nach vorherigem Anspruch, **dadurch gekennzeichnet, dass** die Halterungskappe mit nach innen gerichteten Fortsätzen (16) in seitliche Führungsnuten des Grundkörpers (14) eingreift.

8. Vorrichtung nach einem der vorherigen Ansprüche 1-4, **dadurch gekennzeichnet, dass** das linearbeweglich gelagerte Wirkelement (8b) des unterseitigen Befestigungsmittels (8) über ein Federmittel (12) nach innen, in seiner Bewegungsachse zum Vorrichtungsmittelpunkt hin gerichtet, vorgespannt ist.

9. Vorrichtung nach einem oder mehreren der vorherigen Ansprüche, **dadurch gekennzeichnet, dass** das linearbewegliche Wirkelement (8b; 10b) Fixierungsmittel zur Arretierung aufweist.

10. Vorrichtung nach vorherigem Anspruch, **dadurch gekennzeichnet, dass** das Fixierungsmittel als Feststellschraube ausgebildet ist.

11. Vorrichtung nach einem der vorherigen Ansprüche, **dadurch gekennzeichnet, dass** die Vorrichtung oberseitig Federmittel (15) aufweist, welche bei montierter Schaltgerätekombination gegen zumindest eines der Schaltgeräte eine Federkraft ausüben.

12. Vorrichtung nach einem der vorherigen Ansprüche, **dadurch gekennzeichnet, dass** mindestens zwei axial voneinander beabstandete Wirkelemente (10a) vorhanden sind.

13. Vorrichtung nach einem der vorherigen Ansprüche 1-11, **dadurch gekennzeichnet, dass** das Wirkelement (10a) in verschiedenen axial voneinander beabstandeten Positionen am Grundkörper (14) arretierbar ist.

## Claims

1. Apparatus for fixing switching devices (2, 4) on mounting rails, in particular top-hat rail adapters, comprising
- underside fixing means (8) for the purpose of fixing the apparatus on the mounting rail, and
- upper-side fixing means (10) for the purpose of fixing at least one switching device (2, 4) on the apparatus,
- each fixing means (8; 10) having operative elements (8a, 8b; 10a, 10b) which oppose one another in pairs,
**characterized in that** at least one operative element (10b), which is arranged on the upper side, and at least one operative element (8b), which is arranged on the underside, are mounted such that they can move linearly such that the spacing between the opposing operative elements (8a, 8b; 10a, 10b) can be varied for different fixing positions (I, II).

2. Apparatus according to Claim 1, **characterized in that** the operative elements (8a, 8b; 10a, 10b) which oppose one another in pairs are arranged on a plane which extends parallel to the surface plane of the base body (14) of the apparatus.

3. Apparatus according to Claim 1 or 2, **characterized in that** the operative elements (10a, 10b) of the upper-side fixing means (10) for the purpose of fixing switching devices (2, 4) are formed with top-hat rail receptacles.

4. Apparatus according to one of the preceding claims, **characterized in that** the operative element (8b; 10b) which can move linearly extends over the entire width (b) of the base body (14) of the apparatus.

5. Apparatus according to one of the preceding claims, **characterized in that** the operative element (10b), which is mounted such that it can move linearly, of the upper-side fixing means (10) is prestressed to the outside, pointing away from the apparatus centre point in its movement axis, via a spring means (12).

6. Apparatus according to one of the preceding claims, **characterized in that** the operative element (10b), which is arranged on the upper side and can move linearly, is in the form of a holding cap having a U-shaped cross section.

7. Apparatus according to the preceding claim, **characterized in that** the holding cap engages with inwardly pointing protrusions (16) in lateral guide grooves in the base body (14).

8. Apparatus according to one of the preceding claims 1 - 4, **characterized in that** the operative element (8b), which is mounted such that it can move linearly, of the underside fixing means (8) is prestressed inwards, pointing towards the apparatus centre point in its movement axis, via a spring means (12).

9. Apparatus according to one or more of the preceding claims, **characterized in that** the operative element (8b; 10b) which can move linearly has fixing means for locking purposes.

10. Apparatus according to the preceding claim, **characterized in that** the fixing means is in the form of a fastening screw.

11. Apparatus according to one of the preceding claims, **characterized in that** the apparatus has spring means (15) on the upper side which exert a spring force against at least one of the switching devices when the switching device combination is assembled.

12. Apparatus according to one of the preceding claims, **characterized in that** at least two operative elements (10a) are provided which are axially spaced apart from one another.

13. Apparatus according to one of the preceding claims 1 - 11, **characterized in that** the operative element (10a) can be locked in different positions on the base body (14) which are axially spaced apart from one another.

## Revendications

1. Dispositif de fixation d'appareillages de commutation (2, 4) sur des profilés supports, notamment des adaptateurs pour rail DIN, comprenant
- des moyens de fixation côté inférieur (8) pour fixer le dispositif sur le profilé support et
- des moyens de fixation côté supérieur (10) pour fixer au moins un appareillage de commutation (2, 4) sur le dispositif,
- chaque moyen de fixation (8 ; 10) présentant des éléments actifs (8a, 8b ; 10a, 10b) opposés par paires,
**caractérisé en ce qu'**au moins un élément actif disposé côté supérieur (10b) et au moins un élément actif disposé côté inférieur (8b) est logé de manière à pouvoir bouger linéairement de telle sorte que l'écart entre les éléments actifs (8a, 8b ; 10a, 10b) opposés peut varier pour différentes positions de fixation (I, II).

2. Dispositif selon la revendication 1, **caractérisé en ce que** les éléments actifs (8a, 8b ; 10a, 10b) opposés par paires sont disposés dans un plan qui s'étend parallèlement au plan de surface du corps de base (14) du dispositif.

3. Dispositif selon la revendication 1 ou 2, **caractérisé en ce que** les éléments actifs (10a, 10b) du moyen de fixation côté supérieur (10) sont configurés pour fixer des appareillages de commutation (2, 4) munis de logements pour rail DIN.

4. Dispositif selon l'une des revendications précédentes, **caractérisé en ce que** l'élément actif mobile linéairement (8b ; 10b) s'étend sur toute la largeur (b) du corps de base (14) du dispositif.

5. Dispositif selon l'une des revendications précédentes, **caractérisé en ce que** l'élément actif mobile linéairement (10b) du moyen de fixation côté supérieur (10) est précontraint vers l'extérieur par le biais d'un moyen ressort (12), dirigé dans son axe de déplacement depuis le point central du dispositif.

6. Dispositif selon l'une des revendications précédentes, **caractérisé en ce que** l'élément actif mobile linéairement (10b) disposé côté supérieur est réalisé sous la forme d'un chapeau de maintien avec une section transversale en forme de U.

7. Dispositif selon la revendication précédente, **caractérisé en ce que** le chapeau de maintien pénètre dans des rainures de guidage latérales du corps de base (14) avec des prolongements (16) dirigés vers l'intérieur.

8. Dispositif selon l'une des revendications précédentes 1 à 4, **caractérisé en ce que** l'élément actif mobile linéairement (8b) du moyen de fixation côté inférieur (8) est précontraint vers l'intérieur par le biais d'un moyen ressort (12), dirigé dans son axe de déplacement en direction du point central du dispositif.

9. Dispositif selon l'une ou plusieurs des revendications précédentes, **caractérisé en ce que** l'élément actif mobile linéairement (8b ; 10b) présente des dispositifs de fixation pour le blocage.

10. Dispositif selon la revendication précédente, **caractérisé en ce que** les moyens de fixation sont réalisés sous la forme de vis de blocage.

11. Dispositif selon l'une des revendications précédentes, **caractérisé en ce que** le dispositif présente des moyens ressorts côté supérieur (15) qui, lorsque la combinaison d'appareillages de commutation est montée, exercent une force élastique contre au moins l'un des appareillages de commutation.

12. Dispositif selon l'une des revendications précédentes, **caractérisé en ce qu'**il existe au moins deux éléments actifs (10a) espacés l'un de l'autre dans le sens axial.

13. Dispositif selon l'une des revendications précédentes 1 à 11, **caractérisé en ce que** l'élément actif (10a) peut être bloqué dans différentes positions espacées les unes des autres dans le sens axial sur le corps de base (14).
